# EUROPÄISCHE PATENTSCHRIFT

(11) **EP 1 847 854 B1**
(45) Veröffentlichungstag und Bekanntmachung des Hinweises auf die Patenterteilung: **22.10.2008**
(21) Anmeldenummer: 07000301.7
(22) Anmeldetag: 09.01.2007
(51) Int. Cl.: G01V 3/08

(54) **Vorrichtung zur Ermittlung einer Verlegetiefe von metallischen Leitungen**
Device for determining a laying depth of metal circuits
Dispositif destiné à déterminer la profondeur de pose de conduits métalliques

(30) Priorität: 19.04.2006 DE 102006018130
(43) Veröffentlichungstag der Anmeldung: 24.10.2007
(73) Patentinhaber: Hagenuk KMT Kabelmesstechnik GmbH, 01471 Radeburg (DE)
(72) Erfinder: Fraedrich, Volker, 01762 Schmiedeberg (DE)
(74) Vertreter: Hansmann, Dierk

(56) Entgegenhaltungen:
- EP-A2- 0 388 041
- EP-B1- 0 113 736
- WO-A-95/30913
- WO-A-20/06015310
- DE-A1- 19 925 760
- US-A- 5 001 430
- US-A- 5 773 971

## Beschreibung

Die Erfindung betrifft eine Vorrichtung zur Ermittlung einer Verlegetiefe von metallischen Leitungen, insbesondere elektrische Kabel, über elektrische Ortungsgeräte für Leitungen durch Anzeige im Display des Ortungsgerätes, wobei eine Ortung über auf die Leitung aufgebrachte Signale als aktive Ortung oder über betriebsmäßig angeordnete elektrische Leitungen als passive Ortung mit einer Bodenmarkierung durchführbar ist und das Ortungsgerät mindestens zwei horizontal, parallel im definierten vertikalen Abstand angeordnete Antennen zur Erfassung der elektromagnetischen Felder der Leitung aufweist sowie die Signale in getrennten Kanälen verarbeitet und einem Speicher zuführbar sind, wobei über einen Differentiator ein Signal einer Antenne optimierbar und die Ausgänge eines Moduls zur Signalverarbeitung beider Meßwertspeicher dem Differentiator und mit Referenzmitgliedern koppelbaren Komperatoren zur Festlegung eines Schaltpunktes zwischen Meßwertspeicher und aktuellem Meßwert als Eingang einer Steuerungseinheit für eine Ansteuerung eines Displays zuführbar sind.

Zur Messung der Verlegetiefe von metallischen Leitungen werden in der Praxis unterschiedliche Verfahren und Anordnungen angewendet.

Es gibt bewährte Verfahren zur Tiefenmessung mit Leitungsortungsanlagen, diese Anlagen bestehen mindestens aus einem Empfänger mit mindestens einer Antenne zur Aufnahme eines elektromagnetischen Feldes, dieses Feld wird bewirkt durch einen Stromfluß in einer Leitung, beispielsweise in einem Kabel oder in einer metallischen Rohrleitung. Der Empfänger kann abgeglichen sein für den Empfang von unterschiedlichen Signalfrequenzen. So wird beim Abgleich des Empfängers auf die Frequenz des öffentlichen Energienetzes, beispielsweise 50Hz, das elektro- magnetische Feld des betriebsmäßig fließenden Stromes geortet.

Dieses Verfahren hat jedoch den Nachteil, daß die Leitung nicht geortet werden kann, wenn kein Strom fließt oder wenn das elektromagnetische Feld der Leitung durch das Feld eines in der Nähe befindlichen Rückleiters kompensiert wird.

Diesen Nachteil vermeidet die Verwendung eines speziellen Signalsenders, der an die Leitung angeschlossen wird und mit einem definierten Signal einen Stromfluß in der Leitung bewirkt.

Das erstgenannte Verfahren der Leitungsortung mit einem Empfänger und ohne speziellen Signalsender wird in der Praxis mit "passive Ortung" bezeichnet, die Ortung mit einem Empfänger und die Verwendung eines speziellen Signalsenders wird als "aktive Ortung" bezeichnet.

Ein bekanntes Verfahren zur Tiefenmessung für die passive und die aktive Ortung nutzt einen Empfänger, dieser verfügt über eine drehbare und in definierten Drehwinkeln einrastende Antenne. In einem ersten Arbeitsgang wird die Antenne so eingerastet, daß genau vertikal über der Zielleitung ein Signalminimum geortet werden kann, dessen Position durch eine erste Markierung gekennzeichnet werden kann. In einem zweiten Arbeitsgang wird die Antenne in einem Drehwinkel von +45°, bezogen auf die Raststellung von 0° des ersten Arbeitsganges, eingerastet und im rechten Winkel zur Zielleitung seitlich bewegt. Die Position des meßbaren Signalminimums wird wiederum markiert. In einem dritten Arbeitsgang wird die Antenne in einem Drehwinkel von -45°, bezogen auf die Raststellung von 0° des ersten Arbeitsganges, eingerastet und im rechten Winkel zur Zielleitung zur anderen Seite seitlich bewegt. Die Position des meßbaren Signalminimums wird wiederum markiert. Der hälftige Abstand der beiden 45°-Markierungen entspricht dann der Verlegetiefe der Zielleitung. Mit einer Bewertung der Symmetrie der beiden 45°- Markierung bezogen auf die 0°- Markierung ist weiterhin eine Bewertung der Genauigkeit der Tiefenmessung ableitbar.

Der Vorteil des beschriebenen Verfahrens zur Tiefenmessung besteht im vergleichsweise geringen apparativen Aufwand für einen Empfänger mit nur einer Antenne. Ein weiterer Vorteil besteht in der Möglichkeit, die Tiefe auch in der passiven Ortung mit betriebsmäßig fließendem Signalstrom bestimmen zu können, ohne Verwendung eines speziellen Signalsenders. Ein Nachteil des beschriebenen Verfahrens besteht in der Notwendigkeit des konstruktiven Aufwandes für eine drehbare und rastende Antenne. Ein weiterer Nachteil besteht in der für diese Methode notwendigen Qualifikation des Bedienpersonals, es muß das Verständnis der Charakteristik des elektro- magnetischen Feldes im Zusammenhang mit der unterschiedlichen Orientierung der Antenne geschult werden.

Ein weiteres bekanntes Verfahren zur Tiefenmessung mit einer Leitungsortungsanlage nutzt einen speziellen Signalsender und einen Empfänger für die aktive Ortung. Der Sender koppelt an eine Zielleitung ein definiertes Signal, dieses Signal bewirkt einen Stromfluß in der Zielleitung, der Stromfluß bewirkt ein elektromagnetisches Feld im Bereich der Zielleitung. Ein Empfänger ist auf das definierte Signal des Senders abgeglichen und verfügt über zwei horizontal orientierte Antennen zur Aufnahme des elektro- magnetischen Feldes über der Zielleitung, deren Achsen parallel und in einem definierten vertikalen Abstand angeordnet sind. Die Messung der Antennensignale und die mathematische Verarbeitung der Meßwerte bezogen auf den definierten Abstand beider Antennen führt schließlich zu einem Meßwert für die Tiefenmessung, dieser wird zur Anzeige gebracht, beispielsweise als Zahlenwert auf einer numerischen Anzeige oder als Zeigerausschlag auf einem Zeigerinstrument.

Der Vorteil des beschriebenen Verfahrens zur Tiefenmessung besteht in der auch für ungeschultes Bedienpersonal einfach erfaßbaren direkten Anzeige der Verlegetiefe der zielleitung.

Ein Nachteil besteht in der relativ hohen Wahrscheinlichkeit der Verfälschung der Messungen der Antennensignale durch den Einfluß von Störquellen, beispielsweise durch den Stromfluß in anderen Kabeln, Rohren, Leitplanken, Eisenbahnschienen. Diese Verfälschungen der Meßwerte für die Verlegetiefe sind eventuell für das Bedienpersonal mit vergleichsweise hoher Qualifizierung und Erfahrung erkennbar.

Die Anwendung dieses vorgenannten Verfahrens kann in der Praxis bei der passiven Ortung nicht angewendet werden. So wird bei der passiven Ortung mit der Frequenz des öffentlichen Energienetzes, beispielsweise 50Hz, das elektro- magnetische Feld des betriebsmäßig fließenden Stromes über der Zielleitung derart beeinflußt, daß überwiegend falsche Meßwerte für die Verlegetiefe angezeigt werden würden. Diese Beeinflussung resultiert aus dem Vorhandensein parasitärer Rückströme in allen Arten metallischer Körper in der Nähe der Position der Tiefenmessung.

Alle vorgenannten Verfahren und Vorrichtungen haben den Nachteil, daß hohe Anforderungen hinsichtlich des konstruktiven Aufwandes besteht oder aber die Beurteilung des komplexen Empfangssignals sehr subjektiv ist und vom Bedienpersonal des Empfängers vergleichsweise viel Erfahrung und physikalischtechnische Qualifikation erfordert.

Der Erfindung liegt deshalb die Aufgabe zugrunde, eine Vorrichtung zur Anzeige bzw. Ermittlung der Verlegetiefe von metallischen Leitungen bei der aktiven und bei der passiven Ortung zu schaffen, die bei der passiven Ortung die Bedienung des Empfängers derart vorgibt, daß für das Bedienpersonal keine besondere Qualifikation oder Kenntnis der Charakteristik des elektro- magnetischen Feldes erforderlich ist.

Diese Aufgabe wird erfindungsgemäß dadurch gelöst, für die passive Ortung Markierungen zur Ausrichtung/Einstellung des Empfängers zum Verlauf eines Kabels anzeigbar sind und der Empfänger in eine Position mit Signalmaximum bringbar und eine Bodenmarkierung anbringbar ist sowie über eine seitliche Bewegung des Empfängers rechtwinklig zum Kabel eine Meßwertverringerung durch einen Differentiator erfaßbar und eine Bodenmarkierung anbringbar ist und der Abstand der Bodenmarkierungen als Maß für die Verlegetiefe dient.

Eine erfindungsgemäße Weiterbildung sieht vor, daß über einen Umschalter A/P eine passive oder aktive Ortung einstellbar ist.

Werden bei der aktiven Ortung im Empfänger die Signale des speziellen Signalsenders empfangen, erfolgt die Anzeige eines Tiefenmeßwertes als numerischer Wert.

Das Bedienpersonal muß den Empfänger in eine Position für die Tiefenmessung über der Zielleitung bringen. Diese Position wird erreicht, wenn am Empfänger ein Signalmaximum angezeigt wird. Werden bei der passiven Ortung im Empfänger die Signale von betriebsmäßig fließenden Strömen geortet erfolgt mit der Anzeige von Pfeilen und Symbolen die Bedienerführung. Die Anzeige wechselnder Pfeile und Symbole zur Bedienerführung erfolgt durch die Bewertung der Antennensignale bezogen auf das Signalmaximum genau über der Zielleitung.

Eine einfache Ausbildung für die passive Ortung besteht darin, daß bei einer passiven Ortung der Empfänger RX in eine Position mit Signalmaximum bringbar ist und ein Symbol MARK anzeigbar und eine Bodemarkierung MC anbringbar und eine seitliche Bewegung des Empfängers RX rechtwinklig zum Kabel entsprechend einem Symbol SIDE einstellbar ist sowie eine Meßwertverringerung über einen Differentiator erfaßbar ist, die bei einem Symbol MARK eine Meßwertverringerung um etwa 6 dB einen Winkel von 45 Grad zum Kabel entspricht und eine Bodenmarkierung MS zur Bestimmung einer Verlegetiefe D entsprechend dem Abstand der Bodenmarkierungen aufweist.

Ausführungsbeispiele der Erfindung sind in der Zeichnung schematisch dargestellt. Es zeigen:
- Fig. 1: einen Blockschaltplan des Empfängers;
- Fig. 2: eine Übersicht zu den Pfeilen und Symbolen für die Anzeige;
- Fig. 3: eine Darstellung der Anzeige bei der passiven Ortung mit einem ersten Arbeitsgang;
- Fig. 4: eine Darstellung der Anzeige bei der passiven Ortung mit einem zweiten Arbeitsgang;
- Fig. 5: eine Darstellung der Anzeige bei der passiven Ortung mit einem dritten Arbeitsgang;
- Fig. 6: eine Darstellung der Anzeige bei der passiven Ortung wie in Fig. 4 mit einem weiteren Komperator zur Schaltung mit einem niedrigen Differenzwert mit verkürzten Pfeilen.
- Fig. 7: eine Darstellung der Anzeige bei der aktiven Ortung.

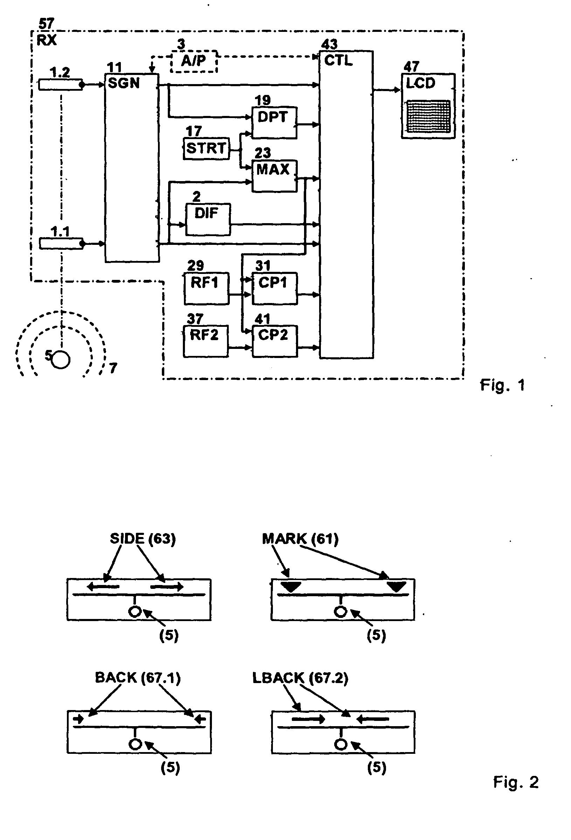

Aus dem Blockschaltplan in Fig. 1 ist ersichtlich, daß ein Empfänger RX (57) mindestens zwei Antennen hat, eine erste Antenne (1.1) mit horizontaler Richtcharakteristik und eine gleichartige zweite Antenne (1.2), beide Antennen sind parallel und in einem definierten Abstand zueinander angeordnet. Mit dem Empfänger RX (57) wird das durch den Signalstrom im Kabel (5) erzeugte elektro- magnetische Feld (7) über der Trasse des Kabels (5) aufgenommen. Der Empfänger RX (57) wird dabei so orientiert, daß beide Antennen (1.1) und (1.2) ein Maximum- Signal erzeugen. Die Ortung mit Maximum- Signal ist an sich bekannt, deshalb sollen die für die Anzeige des empfangenen Signalpegels notwendigen Baugruppen hier nicht dargestellt und beschrieben werden.

Die Signale der Antennen (1.1) und (1.2) werden in einem Modul SGN (11) in zwei getrennten Kanälen in geeigneter weise verarbeitet, beispielsweise verstärkt, gefiltert und gleichgerichtet. Eine Variante der Vorrichtung verfügt über einen Umschalter A/P (3), mit diesem kann eingestellt werden, ob die Signale eines (hier nicht dargestellten) speziellen Signalsenders für die aktive Ortung oder die Signale eines betriebsmäßig in diesem Kabel (5) fließenden Strom für die passive Ortung verarbeitet werden sollen.

Der Empfänger RX (57) enthält weiterhin einen ersten Meßwertspeicher DPT (19) zur Speicherung des Wertes der Antenne (1.2) und einen zweiten Meßwertspeicher MAX (23) zur Speicherung des Wertes der Antenne (1.1). Die Speicherung beider Werte wird mit einer Taste STRT (17) durch das Bedienpersonal veranlaßt.

Der Empfänger RX (57) enthält weiterhin einen Differentiator DIF (2) an dessen Eingang das in der Signalverarbeitung SGN (11) verarbeitete Ausgangssignal der Antenne (1.1) geschaltet ist und an dessen Ausgang die Information für die Steuerung CTL (43) über den Trend der Änderung des empfangenen Signalpegels geliefert wird, dadurch ist erkennbar, ob der Signalpegel im Verlauf der Ortung gleich bleibt oder größer oder kleiner wird.

Der Empfänger RX (57) enthält weiterhin mindestens zwei Komparatoren CP1 (31) und CP2 (41), jeder Komparator CP1 (31) und CP2 (41) hat zwei Eingänge. Jeweils der erste Eingang beider Komparatoren ist mit dem Ausgang des Meßwertspeichers MAX (23) verbunden. An den zweiten Eingang des Komparators CP1 (31) ist der Ausgang eines Referenzgliedes RF1 (29) geschaltet. An den zweiten Eingang des Komparators CP2 (41) ist der Ausgang eines Referenzgliedes RF2 (37) geschaltet. Mit den Referenzgliedern RF1 (29) und RF2 (37) wird der Schaltpunkt der Komparatoren CP1 (31) oder CP2 (41) festgelegt.

Die Ausgänge des Moduls zur Signalverarbeitung SGN (11), der beiden Meßwertspeicher DPT (19) und MAX (23), des Differentiators DIF (2) und der Komparatoren CP1 (31) und CP2 (41) werden einzeln an die Eingänge einer Steuerung CTL (43) für die Steuerung einer Anzeige LCD (47) geschaltet.

In der Steuerung CTL (43) werden entsprechend der unterschiedlichen möglichen Kombinationen der Zustände an den Ausgängen von A/P (3), DPT (19), MAX (23), DIF (2), CP1 (31) und CP2 (41) unterschiedliche Anzeigen für die Ausgabe an die Anzeige LCD (47) generiert. Die Anzeige LCD (47) soll in vorteilhafter Weise als Punkt- Matrix-Grafik- Anzeige gestaltet sein.

Fig. 2 gibt eine Übersicht zu den verwendeten Pfeilen und Symbolen für die Anzeige und Bedienerführung bei der passiven Ortung.

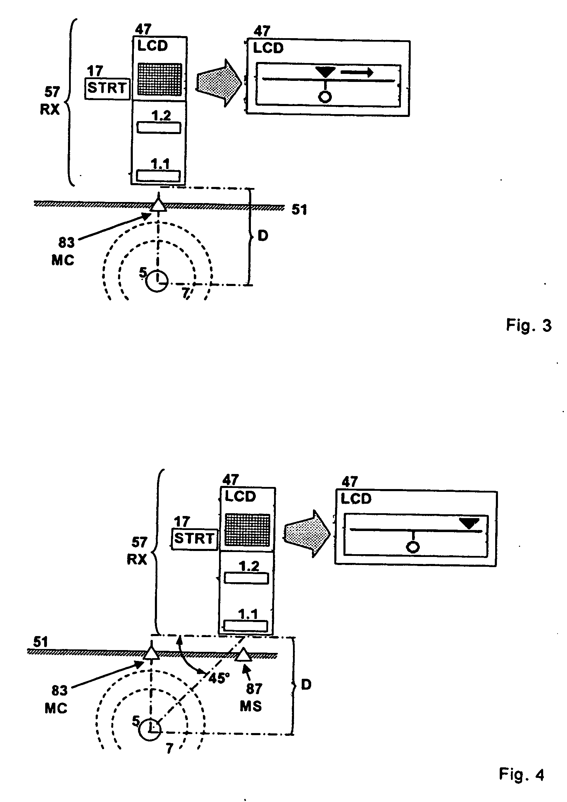

Beispielhaft zeigen Fig. 3 bis Fig. 6 ein Kabel (5), das durch Stromfluß bewirkte elektro- magnetische Feld (7), die Lage der Erdoberfläche (51), die Verlegetiefe D sowie die Position des Empfängers RX (57) mit den Antennen (1.1) und (1.2), mit der Anzeige LCD (47) und der Taste STRT (17). Die bildliche Darstellung des Empfängers soll nur der Erläuterung des Funktionsprinzips dienen und muß nicht der praktischen Ausführung entsprechen. Weiterhin wird jeweils eine vergrößerte Kopie der Anzeige LCD (47) dargestellt, um Details besser erkennbar zu machen.

Fig. 3 bis Fig. 6 zeigen die erfindungsgemäße Anzeige für die Messung der Verlegetiefe bei der passiven Ortung betriebsmäßig fließenden Stromes im Kabel (5).

Fig. 3 zeigt die Anzeige bei Beginn der Messung. In einem ersten Arbeitsgang wird der Empfänger RX (57) in eine Position mit Signalmaximum gebracht. Mit der Betätigung der Taste STRT (17) durch das Bedienpersonal erfolgt die oben beschriebene Signalverarbeitung mit SGN (11), die Speicherung des aktuellen Meßwertes im Speicher MAX (23) und mit anschließender Anzeige eines Pfeils SIDE (63) und eines Symboles MARK (61) zur Bedienerführung. Die Pfeile und Symbole sind in der Übersicht Fig. 2 dargestellt.

Das Symbol MARK (61) ist die Aufforderung an das Bedienungspersonal zur Anbringung einer Markierung MC (83) auf der Erdoberfläche (51) an der Position des Empfängers RX (57). Der beispielsweise nach links weisende Pfeil SIDE (63) fordert zur seitlichen Bewegung des Empfängers RX (57) rechtwinklig zum Verlauf des Kabels (5) nach links auf.

Bei der seitlichen Bewegung des Empfängers RX (57) verändert sich der Winkelabstand zum Kabel (5). Das elektro- magnetische Feld (7) durchdringt die horizontale Antenne (1.1) mit ebenfalls geändertem Winkel und bewirkt so die Verringerung der Meßwerte im Empfänger RX (57). Dieser Trend der MeßwertVerringerung wird mit dem Differentiator (2) erfaßt und zur Steuerung CTL (43) gegeben, deshalb erfolgt für die Bedienerführung weiterhin die Anzeige des Symbols SIDE (63). Erreicht die seitliche Position des Empfängers eine 45°- Lage, bezogen auf die Lage des Kabels (5), entspricht dieser seitliche Abstand von der Markierung MC (83) genau der Verlegetiefe D. In dieser Position wird die horizontale Antenne (1.1) vom elektromagnetischen Feld (79) in einem Winkel von 45° durchdrungen, das bewirkt eine Verringerung der Meßwerte um 6 dB, bezogen auf die Meßwerte der Position MC (83) des Empfängers RX (57) über dem Kabel (5) / Fig. 3.

Im Empfänger RX (57) wird das Referenzglied RF1 (29) so eingestellt, daß der Komparator CP1 (31) schaltet, wenn eine Differenz von 6 dB zwischen dem Meßwert im Speicher MAX (23) und dem aktuellen Meßwert besteht.

Fig. 4 zeigt die Anzeige nach der Reaktion der Steuerung CTL (43) auf das Schalten des Komparators CP1 (31). Das seitliche Symbol MARK (61) ist die Aufforderung an das Bedienungspersonal zur Anbringung einer seitlichen Markierung MS (87) auf der Erdoberfläche (51) zur Markierung der Position des Empfängers RX (57).

Im Empfänger RX (57) wird das Referenzglied RF2 (37) so eingestellt, daß der Komparator CP2 (41) schaltet, wenn eine Differenz von 7 dB zwischen dem Meßwert im Speicher MAX (23) und dem aktuellen Meßwert besteht.

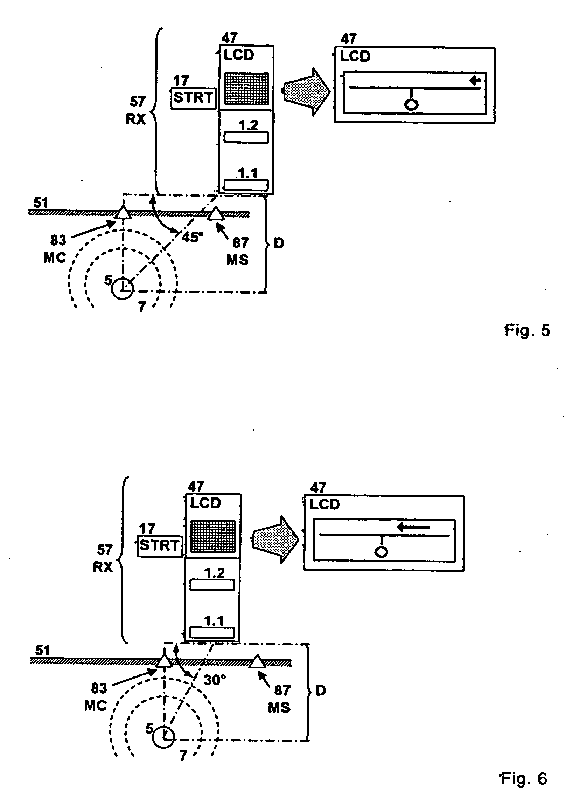

Fig. 5 zeigt die Anzeige nach der Reaktion der Steuerung CTL (43) auf das Schalten des Komparators CP2 (41). Die Anzeige des Pfeils BACK (67.1) ist die Aufforderung für das Bedienpersonal zur Umkehrung der seitlichen Bewegungsrichtung des Empfängers. An der Position mit der seitlichen Markierung wird erneut die Anzeige aus Fig. 4 aktiviert.

Der Abstand der Markierungen MC (83) und MS (87) auf der Erdoberfläche (51) entspricht der Verlegetiefe D des Kabels (5). Dieser Abstand kann mit bekannten Mitteln gemessen werden, beispielsweise mit einem Maßband.

Fig. 6 zeigt die Anzeige für eine Bewegung des Empfängers RX (57) von der Markierung MS (87) in Richtung Markierung MC (83) über dem Kabel (5). Der von der Antenne (1.1) empfangene Signalpegel wird höher und die Komparatoren CP1 (31) und CP2 (41) schalten wieder zurück. Dieser Trend der Erhöhung des Signalpegels wird mit dem Differentiator DIF (2) an die Steuerung CTL (43) gegeben und bewirkt eine Anzeige des Pfeils LBACK (67.2).

Mit jeder Betätigung der Taste STRT (17) wechselt die Richtung der Pfeile SIDE (63), BACK (67.1), LBACK (67.2) und der seitlichen Symbole MARK (61), um die Tiefenbestimmung für den Bediener abwechseln links oder rechts zu ermöglichen.

Die Messung kann, ausgehend von der Markierung MC (83) an der Position über dem Kabel (5) zur anderen Seite wiederholt werden. Wenn beide Seitenmarkierungen MS (87) den gleichen Abstand zur Markierung MC (83) haben, ist das elektro- magnetische Feld (7) weitgehend homogen und der Meßwert für die Verlegetiefe D vergleichsweise genau. Haben beide seitlichen Markierungen MS (87) unterschiedlichen Abstand zur Markierung MC (3), läßt das auf eine Störung der Homogenität des elektromagnetischen Feldes (7) schließen, verursacht durch fremde Leitung in der Nähe des Kabels (5). Der hälftige Abstand der beiden Markierung MS (87) entspricht dann in guter Näherung der Verlegetiefe D des Kabels (5).

Eine vorteilhafte Weiterbildung der Erfindung kann erreicht werden, wenn der Empfänger RX (57) ein weiteres Referenzglied RF3 mit einem weiteren Komparator CP3 aufweist. Das Referenzglied RF3 wird so eingestellt, daß der Komparator CP3 schaltet, wenn eine Differenz von 3 dB zwischen dem Meßwert im Speicher MAX (23) und dem aktuellen Meßwert besteht. Dann erfolgt die Anzeige nach Fig. 6 ohne das Symbol MARK (61) und mit verkürzten Pfeilen LBACK (67.2).

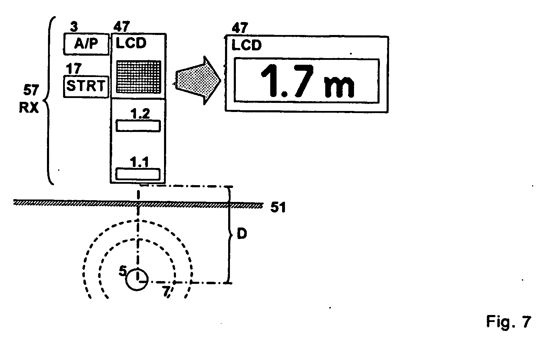

Fig. 7 zeigt eine vorteilhafte Weiterbildung der Vorrichtung für die an sich bekannte numerische Anzeige der Verlegetiefe bei der aktiven Ortung. Ein spezielles Sendesignal eines hier nicht dargestellten Signalsenders wird auf die Leitung gekoppelt. Am Empfänger RX (57) muß der Umschalter A/P (3) in der Stellung für die aktive Ortung sein. Der Empfänger RX (57) wird in eine Position mit Signalmaximum gebracht. Im ungestörten elektro- magnetischen Feld (7) befindet sich das Signalmaximum genau senkrecht über dem Kabel (5). Mit der Betätigung der Taste STRT (17) durch das Bedienpersonal erfolgt im Empfänger RX (57) die oben beschriebene Signalverarbeitung mit dem Modul SGN (11), mit anschließender Berechnung der Tiefe entsprechend den Meßwerten in DPT (19) und MAX (23) bezogen auf den bekannten Abstand der Antennen (1.1) und (1.2) und die numerischer Anzeige des Meßergebnisses für die Verlegetiefe D, hier im Beispiel 1.7 m.

## Patentansprüche

1. Vorrichtung zur Ermittlung einer Verlegetiefe (D) von metallischen Leitungen (5), insbesondere elektrische Kabel, über elektrische Ortungsgeräte (57) für Leitungen (5) durch Anzeige im Display (47) des Ortungsgerätes (57), wobei eine Ortung über auf die Leitung (5) aufgebrachte Signale als aktive Ortung oder über betriebsmäßig angeordnete elektrische Leitungen (5) als passive Ortung mit einer Bodenmarkierung (83, 87) durchführbar ist und das Ortungsgerät (57) mindestens zwei horizontal, parallel im definierten vertikalen Abstand angeordnete Antennen (1.1, 1.2) zur Erfassung der elektromagnetischen Felder (7) der Leitung (5) aufweist sowie die Signale in getrennten Kanälen verarbeitet und je einem Speicher (19, 23) zuführbar sind, wobei über einen Differentiator (2) ein Signal einer Antenne (1.1, 1.2) optimierbar und die Ausgänge eines Moduls zur Signalverarbeitung beider Meßwertspeicher (23) dem Differentiator (2) und mit Referenzgliedern (29, 37) koppelbaren Komperatoren (31, 41) zur Festlegung eines Schaltpunktes, wenn eine festgelegte Differenz zwischen dem Meßwert im Speicher (23) und dem acktuellen Meßwert besteht, als Eingang einer Steuerungseinheit (43) für eine Ansteuerung eines Displays (47) zuführbar sind, **dadurch gekennzeichnet, daß** für die passive Ortung Markierungen (61, 63, 67) zur Ausrichtung/Einstellung des Empfängers RX (57) zum Verlauf eines Kabels (5) am Display anzeigbar sind und **dadurch** der Empfänger RX (57) in eine Position mit Signalmaximum bringbar und eine Bodenmarkierung MX (83) anbringbar ist sowie über eine seitliche Bewegung des Empfängers RX (57) rechtwinklig zum Kabel (5) eine Meßwertverringerung durch den Differentiator (2) erfaßbar und eine Bodenmarkierung MS (87) anbringbar ist und der Abstand der Bodenmarkierungen (83, 87) als Maß für die Verlegetiefe (D) dient.

2. Vorrichtung nach Anspruch 1, **dadurch gekennzeichnet, daß** über einen Umschalter AP(3) eine aktive oder passive Ortung einstellbar ist.

3. Vorrichtung nach Anspruch 1 oder 2, **dadurch gekennzeichnet, daß** bei einer passiven Ortung der Empfänger RX (57) in eine Position mit Signalmaximum bringbar ist und ein Symbol Mark (61) anzeigbar und eine Bodemarkierung MC (83) anbringbar und eine seitliche Bewegung des Empfängers RX (57) rechtwinklig zum Kabel (5) entsprechend einem Symbol Side (63) einstellbar ist sowie eine Meßwertverringerung über einen Differentiator (2) erfaßbar ist, die bei einem Symbol Mark (61) eine Meßwertverringerung um etwa 6 dB einen Winkel von 45 Grad zum Kabel (5) entspricht und eine Bodenmarkierung MS (87) zur Bestimmung einer Verlegetiefe D entsprechend dem Abstand der Bodenmarkierungen (83, 87) aufweist.

4. Vorrichtung nach einem der Ansprüche 1 bis 3, **dadurch gekennzeichnet, daß** im Empfänger RX (57) ein Referenzmitglied RF1 (29) derart eingestellt ist, daß der zugeordnete Komperator CP1 (31) schaltet, wenn eine Differenz von etwa 6 dB zwischen dem Meßwert im Speicher MAX (23) und dem aktuellen Meßwert besteht.

## Claims

1. Device for determining a laying depth (D) of metallic lines (5), in particular electric cables, by means of electrical locating devices (57) for lines (5) by a presentation in the display (47) of the locating device (57), whereby a locating operation can be run by means of signals applied to the line (5) for an active locating operation or by electric lines (5) disposed in readiness for operation with a ground marker (83, 87) for a passive locating operation, and the locating device (57) has at least two antennas (1.1, 1.2) horizontally disposed in parallel at a defined vertical distance in order to detect the electromagnetic fields (7) of the line (5) and the signals are processed in separate channels and can be forwarded to a respective memory (23), and a signal of an antenna (1.1, 1.2) can be optimised by means of a differentiator (2) and the outputs of a module for processing the signals of the two measurement value memories (23) can be forwarded to the differentiator (2) and comparators (31, 41) which can be coupled with reference elements (29, 37) in order to set a switching point if a fixed difference exists between the measurement value in the memory (23) and the current measurement value, serving as an input of a control unit (43) for activating a display (47), **characterised in that,** for the passive locating operation, markings (61, 63, 67) can be displayed on the display in order to orient/adjust the receiver RX (57) with respect to the course of a cable (5), and the receiver RX (57) can thus be moved into a position with a signal maximum and a ground marking MX (83) can be applied, and a reduction in the measurement value can be detected by the differentiator (2) by moving the receiver RX (57) sideways at a right angle to the cable (5), and a ground marking MS (87) can be applied, and the distance of the ground markings (83, 87) is used as a measurement for the laying depth (D).

2. Device as claimed in claim 1, **characterised in that** an active or passive locating operation can be set via a switch AP(3).

3. Device as claimed in claim 1 or 2, **characterised in that** for a passive locating operation, the receiver RX (57) can be moved into a position with a signal maximum and a symbol Mark (61) can be displayed and a ground marking MC (83) applied, and a sideways movement of the receiver RX (57) at a right angle to the cable (5) corresponding to a symbol Side (63) can be set, and a reduction in the measurement value can be detected by means of a differentiator (2), which, in the case of a symbol Mark (61), is a reduction in measurement value of approximately 6 dB corresponding to an angle of 45 degrees from the cable (5) and has a ground marking MS (87) for determining a laying depth D corresponding to the distance of the ground markings (83, 87).

4. Device as claimed in one of claims 1 to 3, **characterised in that** a reference element RF1 (29) in the receiver RX (57) is set so that the co-operating comparator CP1 (31) switches if there is a difference of approximately 6 dB between the measurement value in the memory MAX (23) and the current measurement value.

## Revendications

1. Dispositif pour la détermination d'une profondeur de pose (D) de conduites métalliques (5), en particulier de câbles électriques, au moyen d'appareils de localisation électriques (57) pour conduites (5), par affichage sur l'écran de visualisation (47) de l'appareil de localisation (57), une localisation pouvant être effectuée en tant que localisation active par l'intermédiaire de signaux appliqués sur la conduite (5), ou en tant que localisation passive par l'intermédiaire de conduites électriques (5), agencées conformément au service, avec un marquage au sol (83, 87), et l'appareil de localisation (57) présentant au moins deux antennes (1.1, 1.2) disposées horizontalement, parallèlement, à une distance verticale, définie, pour la saisie des champs électromagnétiques (7) de la conduite (5), et traitant les signaux dans des canaux séparés, chaque signal pouvant être conduit à une mémoire (19, 23), un signal d'une antenne (1.1, 1.2) pouvant être optimisé par l'intermédiaire d'un différentiateur (2), et les sorties d'un module, pour le traitement des signaux des deux mémoires de valeurs de mesure (23), pouvant, en tant qu'entrée d'une unité de commande (43), pour une excitation d'un écran de visualisation (47, être menées au différenciateur (2) et à des comparateurs (31, 41), qui peuvant être couplés avec des organes de référence (29, 37) pour la fixation d'un point de commutation, quand une différence déterminée existe entre la valeur de mesure dans la mémoire (23) et la valeur actuelle, **caractérisé en ce que,** pour la localisation passive, des marques (61, 63, 67) peuvent être affichées sur l'écran de visualisation pour l'ajustement du récepteur RX (57) par rapport au parcours d'un câble (5), et que, de cette manière, le récepteur RX (57) peut être amené dans une position avec maximum du signal, et un marquage au sol MX (83) peut être prévu, de même que, par un mouvement latéral du récepteur RX (57) à angle droit par rapport au câble (5), une réduction de la valeur de mesure peut être saisie par le différentiateur (2), et un marquage au sol MS (87) peut être prévu, et la distance des marquages au sol (83, 87) servent de mesure pour la profondeur de pose (D).

2. Dispositif selon la revendication 1, **caractérisé en ce que,** par l'intermédiaire d'un commutateur AP (3), une localisation active ou passive peut être réglée.

3. Dispositif selon revendication 1 ou 2, **caractérisé en ce que,** lors d'une localisation passive, le récepteur RX (57) peut être amené dans une position avec un maximum du signal et qu'un symbole MARK (61) peut être affiché, et qu'un marquage au sol MC (83) peut être prévu et un mouvement latéral du récepteur RX (57) peut être réglé à angle droit par rapport au câble (5), conformément à un symbole SIDE (63), de même qu'une réduction de la valeur de mesure peut être saisie par l'intermédiaire d'un différentiateur (2), laquelle correspond, pour un symbole MARK (61), à une réduction de valeur de mesure d'environ 6 dB, un angle de 45 degrés par rapport au câble (5), et présente un marquage au sol MS (87) pour la détermination d'une profondeur de pose D, conformément à la distance des marquages au sol (83, 87).

4. Procédé selon l'une des revendications 1 à 3, **caractérisé en ce que,** dans le récepteur RX (57), un organe de référence RF1 (29) peut être réglé de sorte que le comparateur CP1 (31) y associé commute quand une différence de 6 dB environ existe entre la valeur de mesure dans la mémoire MAX (23) et la valeur de mesure actuelle.
